# EUROPÄISCHE PATENTANMELDUNG

(11) **EP 3 322 139 A1**
(43) Veröffentlichungstag der Anmeldung: **16.05.2018**
(21) Anmeldenummer: 17200795.7
(22) Anmeldetag: 09.11.2017
(51) Int. Cl.: H04L 12/721, H04W 84/18

(54) **VERFAHREN ZUR ÜBERMITTLUNG VON NACHRICHTEN IN EINEM VERMITTLUNGSEINHEITEN VERKNÜPFENDEN NETZWERK**

(30) Priorität: 10.11.2016 DE 102016121498
(71) Anmelder: Strothmann, Rolf, 66740 Saarlouis (DE)
(72) Erfinder: Strothmann, Rolf, 66740 Saarlouis (DE)
(74) Vertreter: Patentanwälte Bernhardt / Wolff Partnerschaft mbB

(57) **Zusammenfassung**

Die Erfindung betrifft ein Verfahren zur Übermittlung von Nachrichten in einem Vermittlungseinheiten (1) verknüpfenden Netzwerk, wobei von den Vermittlungseinheiten (1) jeweils mindestens zwei Übertragungswege (2) ausgehen. Erfindungsgemäß wird einer zu übertragenden Nachricht eine Kennung zugeordnet, und dass eine Vermittlungseinheit (1) des Netzwerks, welche die Nachricht über einen der Übertragungswege (2) empfängt und anhand der Kennung identifiziert, unterlässt eine Weiterleitung der Nachricht zumindest dann, wenn sie die Nachricht schon einmal weitergeleitet hat.

## Beschreibung

Die Erfindung betrifft ein Verfahren zur Übermittlung von Nachrichten in einem (intelligente) Vermittlungseinheiten verknüpfenden Netzwerk, wobei von den Vermittlungseinheiten jeweils mindestens zwei Übertragungswege ausgehen.

Herkömmliche, in Computernetzwerken, z.B. dem Internet, angewandte Kommunikationsverfahren basieren auf Routeninformationen, die einen bestimmten Übertragungsweg betreffen und die z.B. in den Netzwerknoten gehalten und hinreichend oft aktualisiert werden müssen. Hieraus ergeben sich verhältnismäßig hohe Anforderungen an die Rechen- und Speicherkapazität im Netzwerk verwendbarer Vermittlungseinheiten. Alternativ werden zur Kommunikation zwischen Netzwerknoten Informationen über die bekannte Struktur des Netzwerks, insbesondere deren Regelmäßigkeit, genutzt.

Der Erfindung liegt die Aufgabe zugrunde, ein neues Verfahren der eingangs erwähnten Art zu schaffen, das eine besonders sichere Übertragung von Nachrichten ermöglicht.

Das diese Aufgabe lösende Verfahren nach der Erfindung ist dadurch gekennzeichnet, dass einer zu übertragenden Nachricht eine Kennung zugeordnet wird, und dass eine Vermittlungseinheit des Netzwerks, welche die Nachricht über einen der Übertragungswege empfängt und anhand der Kennung identifiziert, eine Weiterleitung der Nachricht zumindest dann unterlässt, wenn sie die Nachricht schon einmal weitergeleitet hat.
Durch die erfindungsgemäße Weiterleitung wird vorteilhaft erreicht, dass eine Zielvermittlungseinheit des Netzwerks die Information mehrfach über verschiedene Übertragungswege empfängt, so dass auch bei Ausfall von Teilen des Netzwerks eine sichere Übertragung der Nachricht erfolgt.

Der Übertragungsweg, auf welchem die Vermittlungseinheit die Nachricht empfangen hat, kann zweckmäßig von einer Weiterleitung der Nachricht ausgeschlossen sein.

Im Falle einer Weiterleitung ist zweckmäßig vorgesehen, dass die Vermittlungseinheit über zumindest zwei der von ihr ausgehenden Übertragungswege die Nachricht wieder ausgibt.

In einer weiteren Ausführungsform der Erfindung leitet die Vermittlungseinheit die Nachricht über sämtliche der von ihr ausgehenden Übertragungswege weiter.

Eine Weiterleitung der Nachricht kann auch dann unterbleiben, wenn die Vermittlungseinheit anhand der Nachricht erkennt, dass die Nachricht für keine weitere Vermittlungseinheit des Netzwerks bestimmt ist.

Das Verfahren nach der Erfindung kann zweckmäßig so ausgeführt werden, dass der Nachricht eine für deren Alter maßgebende Information beigefügt oder eine der neben der zeitlichen Lebensdauer Nachricht beigefügte Altersinformation aktualisiert wird. Die Altersinformation kann z.B. die Anzahl schon erfolgter Weiterleitungen der Nachricht betreffen.

Ferner kann eine Weiterleitung der Nachricht durch die Vermittlungseinheit auch dann unterbleiten, wenn sich aus der Altersinformation die Überschreitung einer vorgegebenen Lebensdauer der Nachricht ergibt.

Die Kennung basiert zweckmäßig auf der Kennung einer die Nachricht aussendenden Vermittlungseinheit. Neben der Kennung der Vermittlungseinheit kann diese Kennung ferner eine die Generierung von Nachrichten durch die Vermittlungseinheit kennzeichnende Nummerierung umfassen.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: eine die erfindungsgemäße Nachrichtenübertragung in einem Netzwerk erläuternde Darstellung,
- Fig. 2: eine die weitere Ausbreitung einer Nachricht gemäß Fig. 1 erläuternde Darstellung, und
- Fig. 3: eine die erfindungsgemäße Nachrichtenübertragung in einem weiteren Netzwerk erläuternde Darstellung.

Ein Computernetzwerk umfasst jeweils einen Netzwerkknoten bildende intelligente Vermittlungseinheiten 1, die in dem gezeigten Beispiel jeweils vier Ein-/Ausgänge aufweisen. Von jedem Ein-/Ausgang einer Vermittlungseinheit 1 führt jeweils ein Übertragungsweg 2 zu einer anderen Vermittlungseinheit. Bei den Übertragungswegen kann es sich um drahtgebundene oder drahtlose Übertragungswege handeln. Abweichend von dem gezeigten Beispiel wäre eine Vernetzung von Vermittlungseinheiten 1 durch weniger oder auch weitaus mehr Übertragungswege möglich.

Über die Übertragungswege 2 und die Vermittlungseinheiten 1 kann eine Vermittlungseinheit 1 des Netzwerks mit einer anderen Einheit oder einer Vielzahl anderer Einheiten kommunizieren. Eine von der einen Einheit ausgehende, an die andere oder die anderen Einheiten adressierte Nachricht gelangt ggf. über eine Vielzahl von Übertragungswegen und Vermittlungseinheiten an ihr Ziel.

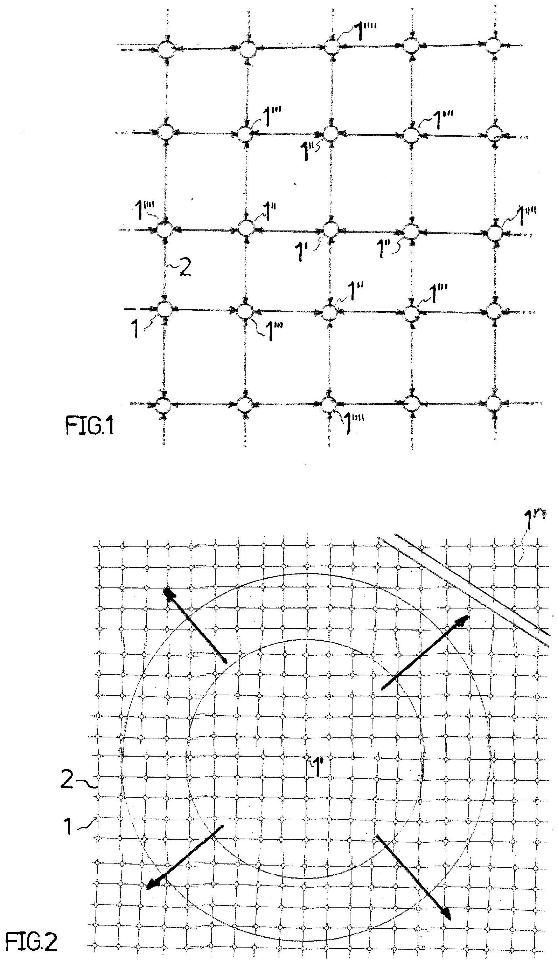

Zur Übertragung einer beispielsweise durch die Einheit 1' in Fig. 1 generierten Nachricht an irgendeine (in Fig. 1 nicht mehr dargestellte) Einheit 1ⁿ des Netzwerks, wird der Nachricht eine Kennung beigefügt, die zweckmäßig die Kennung der Einheit 1' und ggf. eine laufende Generierungsnummer beinhaltet. Die Einheit 1' speichert die Kennung und sendet dann die Nachricht mit der Kennung z.B. über alle vier der von ihm ausgehenden Übertragungswege 2' aus.

Entsprechend geht die Nachricht mit der Kennung in vier umliegenden Vermittlungseinheiten 1 " des Netzwerks ein. Die Einheiten 1 " speichern jeweils die Kennung und leiten die Nachricht wieder über jeweils alle vier der von ihnen ausgehenden Übertragungswege weiter. Vor der Weiterleitung fügen die Einheiten 1 " der Nachricht eine die Anzahl erfolgter Weiterleitungen betreffende weitere Information bei.

Die Nachricht mit der Kennung und weiteren Information geht nun in den jeweils über die Einheiten 1 " erreichbaren Einheiten 1''', 1'''' und 1' ein.
Die die Nachricht viermal empfangende Einheit 1' stellt jedes Mal fest, dass die Kennung der Nachricht in ihr gespeichert ist und ignoriert sie. Die vier Einheiten 1''' empfangen die Nachricht jeweils zweimal. Beim ersten Mal speichern sie die Kennung und geben die Nachricht jeweils über alle vier Übertragungswege weiter, nachdem sie die weitere, die Anzahl der Vermittlungen betreffende Information aktualisiert haben. Beim zweiten Mal stellen die Einheiten 1''' jeweils fest, dass die Kennung der Nachricht bereits in ihnen gespeichert ist und ignorieren deshalb den zweiten Empfang der Nachricht.

Indem jede Einheit in der vorangehend beschriebenen Art und Weise eine empfangene Nachricht nur dann über alle von ihm ausgehenden Übertragungswege weiterleitet, wenn sie die Nachricht nicht schon einmal weitergeleitet hat, breitet sich die Nachricht im Computernetz gemäß Fig. 2 lauffeuerartig aus und erreicht schließlich eine (oder mehrere) Zieleinheiten 1ⁿ mit hoher Übertragungssicherheit, indem die Nachricht der Zieleinheit mehrfach redundant auf unterschiedlichen Übertragungswegen zugeleitet wird.

Die Ausbreitung der Nachricht im Computernetzwerk lässt sich zusätzlich dadurch steuern, dass die Weiterleitung der Nachricht ferner vom Alter der Nachricht abhängig gemacht wird und anhand der weiteren, bei jedem Weiterleitungsprozess beigefügten Information erkannt wird, dass eine vorgegebene Lebensdauer der Nachricht überschritten ist.

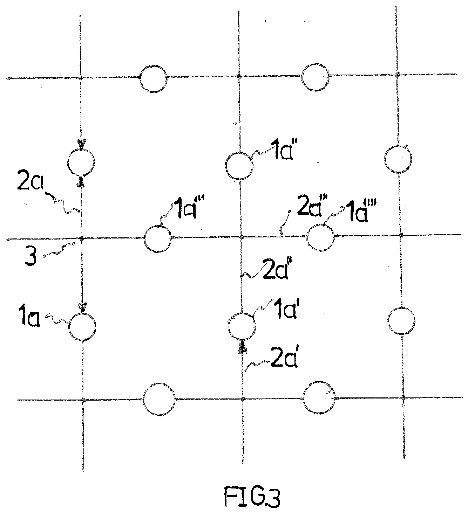

Eine lauffeuerartige Ausbreitung einer Nachricht lässt sich besonders anschaulich anhand des in Fig. 3 dargestellten Ausführungsbeispiels für ein Netzwerk verdeutlichen.

In dem Netzwerk von Fig. 3 sind Netzwerknoten nicht durch intelligente Vermittlungseinheiten 1a sondern die Vermittlungseinheiten 1a verbindende Übertragungswege 2a gebildet, wobei von den Vermittlungseinheiten 1a jeweils zwei Übertragungswege 2a ausgehen. An dem Netzwerkknoten 3 verzweigen sich die Übertragungswege derart, dass eine von einer Vermittlungseinheit 1a ausgehende Nachrichten durch die Verzweigung an drei weitere Vermittlungseinheiten gelangt. Zum Beispiel eine über den Übertragungsweg 2a' in der Vermittlungseinheit 1a' eintreffende Nachricht wird von der Vermittlungseinheit 1a' über die Übertragungswege 2a" und 2a'" an die Vermittlungseinheiten 1a", 1a''' und 1a'''' weitergeleitet. Der Übertragungsweg 2a", über den die Vermittlungseinheit 1a' die Nachricht empfangen hatte, soll in dem beschriebenen Ausführungsbeispiel von einer Weiterleitung der Nachricht ausgeschlossen. So erreicht jede Vermittlungseinheit 1a jeweils drei weitere Vermittlungseinheiten.

Die vorangehenden beschriebenen Nachrichtenübermittlungsverfahren schränken die Weiterleitung einer Nachricht durch die intelligenten Übermittlungseinrichtungen im Minimalfall nur durch die Bedingung ein, dass die Übermittlungseinheit die Nachricht schon einmal weitergeleitet hat. Als weitere mögliche Einschränkungen der Weiterleitung sind der Ausschluss des Übertragungsweges, auf welchem die Übermittlungseinheit die Nachricht empfangen hat, und der Ausschluss der Weiterleitung bei Überschreiten eines vorgegebenen Wertes der Alterung der Nachricht genannt.

Über diese Kriterien hinaus besteht beispielsweise die Möglichkeit, den räumlichen Ausbreitungsbereich der Nachricht zu begrenzen und grob die Ausbreitungsrichtung mehrfach über jeweils mehrere Übertragungswege zu steuern. Hierzu kann den Vermittlungseinheiten z.B. Information über ihren geografischen Ort zugeordnet und der Nachricht kann Information über ein zu erreichendes geografisches Gebiet beigefügt sein. So kann die Weiterleitung der Nachricht durch eine Vermittlungseinheit davon abhängig gemacht werden, ob sich die weiterleitende Vermittlungseinheit innerhalb oder außerhalb dieses Gebietes befindet.

Die Vermittlungseinheiten könnten auch Filterprogramme speichern, welche Nachrichten aufgrund des Ortes der Erzeugung oder einer eventuell vorhandenen Zielinformation behandelt.

Es könnten auch Merkmale in der Nachricht als solche Einfluss auf die Weiterleitung haben, so dass beispielsweise bestimmte Verwaltungs- oder Polizeinachrichten Vorrang haben oder, mit Ausnahme bei Erfüllung der obengenannten Minimalbedingung, immer weitergeleitet werden. Entsprechend können solche Nachrichten in den Vermittlungseinheiten gespeicherte Filter modifizieren.

Es versteht sich, dass die beschriebene Nachrichtenübermittlung im Netzwerk Verschlüsselungstechniken verwenden kann, um Fälschungen zu verhindern.

Generell kann die Weiterleitung einer Nachricht durch eine Vermittlungseinheit bereits dann erfolgen, wenn alle zur Weiterleitungsentscheidung notwendigen Informationen vorliegen und einer der Übertragungswege frei ist. Durch diese Vorgehensweise kann bei geeignete Gestaltung der Nachricht die Weiterleitung merklich beschleunigt und die Dauer der Netzbelegung durch eine Nachricht erheblich reduziert werden.

Die Weiterleitung einer Nachricht könnte auch spekulativ schon dann beginnen, wenn nur bestimmte Kriterien für die Weiterleitung erfüllt sind. Im Extremfall schon dann, wenn lediglich ein Ausgangsübertragungsweg frei ist. Die bereits begonnene Weiterleitung kann abgebrochen werden, sobald feststeht, dass ein Kriterium für die Weiterleitung nicht erfüllt ist.

## Patentansprüche

1. Verfahren zur Übermittlung von Nachrichten in einem Vermittlungseinheiten (1) verknüpfenden Netzwerk, wobei von den Vermittlungseinheiten (1) jeweils mindestens zwei Übertragungswege (2) ausgehen,
**dadurch gekennzeichnet,**
**dass** einer zu übertragenden Nachricht eine Kennung zugeordnet wird, und dass eine Vermittlungseinheit (1) des Netzwerks, welche die Nachricht über einen der Übertragungswege (2) empfängt und anhand der Kennung identifiziert, eine Weiterleitung der Nachricht zumindest dann unterlässt, wenn sie die Nachricht schon einmal weitergeleitet hat.

2. Verfahren nach Anspruch 1,
**dadurch gekennzeichnet,**
**dass** der Übertragungsweg (2a'), auf welchem die Vermittlungseinheit (1a') die Nachricht empfangen hat, von der Weiterleitung der Nachricht ausgeschlossen ist.

3. Verfahren nach Anspruch 1 oder 2,
**dadurch gekennzeichnet,**
**dass** die Vermittlungseinheit (1) im Falle einer Weiterleitung die Nachricht über zumindest zwei der von ihr ausgehenden Übertragungswege (2) weiterleitet.

4. Verfahren nach Anspruch 3,
**dadurch gekennzeichnet,**
**dass** die Vermittlungseinheit (1) die Nachricht über sämtliche der von ihr ausgehenden Übertragungswege (2) weiterleitet.

5. Verfahren nach einem der Ansprüche 1 bis 4,
**dadurch gekennzeichnet,**
**dass** eine Weiterleitung der Nachricht auch dann unterbleibt, wenn die Vermittlungseinheit (1) anhand der Nachricht erkennt, dass die Nachricht für keine weitere Vermittlungseinheit des Netzwerks bestimmt ist.

6. Verfahren nach Anspruch 5,
**dadurch gekennzeichnet,**
**dass** die Vermittlungseinheit (1) der Nachricht eine für deren Alter maßgebende Information beifügt oder eine solche der Nachricht beigefügte Information aktualisiert.

7. Verfahren nach einem der Ansprüche 1 bis 6,
**dadurch gekennzeichnet,**
**dass** die Altersinformation die Anzahl erfolgter Weiterleitungen der Nachricht betrifft.

8. Verfahren nach einem der Ansprüche 6 oder 7,
**dadurch gekennzeichnet,**
**dass** eine Weiterleitung der Nachricht auch dann unterbleibt, wenn sich aus der Altersinformation die Überschreitung eines vorgegebenen Wertes der Nachricht ergibt.

9. Verfahren nach einem der Ansprüche 1 bis 8,
**dadurch gekennzeichnet,**
**dass** die Kennung auf der Kennung einer die Nachricht aussendenden Vermittlungseinheit (1) des Netzwerks basiert.

10. Verfahren nach Anspruch 9,
**dadurch gekennzeichnet,**
**dass** die Kennung neben der Kennung der Vermittlungseinheit (1) eine für die Generierung von Nachrichten durch die Vermittlungseinheit (1) maßgebende Nummerierung umfasst.

11. Verfahren nach einem der Ansprüche 1 bis 10,
**dadurch gekennzeichnet,**
**dass** in den Vermittlungseinheiten (1) Information über ihren geografischen/ geometrischen Ort gespeichert ist und die Nachricht Ortsinformation über ein zu erreichendes geografisches/geometrisches Gebiet oder einen solchen Ort enthält.
